# EUROPÄISCHE PATENTSCHRIFT

(11) **EP 1 191 727 B1**
(45) Veröffentlichungstag und Bekanntmachung des Hinweises auf die Patenterteilung: **12.03.2008**
(21) Anmeldenummer: 01119845.4
(22) Anmeldetag: 16.08.2001
(51) Int. Cl.: H04J 14/02, H04Q 11/00

(54) **Modular erweiterbares optisches ADD-DROP-modul**
Modular expandable optical add-drop module
Module optique d'insertion-extraction extensible de façon modulaire

(30) Priorität: 20.09.2000 DE 10046585
(43) Veröffentlichungstag der Anmeldung: 27.03.2002
(73) Patentinhaber: Nokia Siemens Networks GmbH & Co. KG, 81541 München (DE)
(72) Erfinder: Döbler, Christian, 82024 Taufkirchen (DE); Leisching, Patrick, Dr., 81247 München (DE)

(56) Entgegenhaltungen:
- EP-A- 0 982 891
- WO-A-98/52306

## Beschreibung

Die Erfindung betrifft ein modular erweiterbares optisches ADD-DROP-Modul.

Wellenlängen-Multiplexsysteme, WDM-Systeme und DWDM-Systeme (D-Dense), werden aus Kostengründen möglichst als rein optischen Systeme realisiert. Bei diesen Systemen ist es erforderlich, ADD-DROP-Multiplexer zum Auskoppeln von einzelnen Kanälen (genauer: Signalen einer bestimmten Wellenlänge) und zum Hinzufügen von Kanälen (Signalen der selben Wellenlänge) vorzusehen. Um flexibel auf Kundenanforderungen eingehen zu können, muss das Ein- und Auskoppeln von Wellenlängen fernkonfigurierbar sein und mit minimalen Eingriffen im System durchgeführt werden können.

Bisher wurden vorzugsweise statische ADD-DROP-Module entwickelt. Von der Firma Marconi wird ein ADD-DROP-Multiplexer hergestellt, bei dem ein zugeführtes WDM-Signal in parallele Kanäle aufgespalten wird, die entweder durchgeschaltet oder aus- und eingekoppelt werden. Durch einen WDM-Multiplexer werden die Kanäle ausgangsseitig wieder zusammengefasst. Eine Erweiterung der ADD-DROP-Kapazität ist bei diesem Konzept nicht möglich.

Es ist an sich auch bekannt, mehrere ADD-DROP-Module in Serie zu schalten. Hierbei ist aber keine unterbrechungsfreie Erweiterung möglich. Ein gravierender Nachteil einer solchen Anordnung ist vor allem die hohe Einfügedämpfung (insertion loss).

In der Internationalen Patentanmeldung WO 98/52306 ist eine optische Add-Drop-Einrichtung bekannt, die jeweils eingangsseitig über erste Ausgänge in Reihe geschaltete optische Drop-Filterelemente und ausgangsseitig über erste Eingänge in Reihe geschaltete optische Add-Filterelemente aufweist. An jeweils einem zweiten Ausgang (Drop-Ausgang) der eingangsseitigen Drop-Filterelemente wird ein Kanal eines empfangenen WDM-Signals ausgegeben, der von einem optischen Schalter durchgeschaltet oder gedropt werden kann. Ein durchgeschalteter Kanal oder ein über denselben optischen Schalter geführter Add-Kanal wird über einen zweiten Eingang (Add-Eingang) eines Add-Filterelementes eingefügt. Die Add-Drop-Einrichtung kann entsprechend der Anzahl der zu übertragenen Kanäle konzipiert werden, eine Erweiterung durch hinzuschalten einer weiteren Add-Drop-Einrichtung ist nicht vorgesehen.

Aus der Patentanmeldung EP 0982 891 A1 ist eine weitere optische ADD-DROP-Anordnung bekannt, die zum Selektieren von einzelnen Kanälen eine erste Filteranordnung mit kaskadierten Filtern verwendet. Durch an jeden Filterausgang angeschlossene optische Schalter werden die selektierten Kanäle entweder über durchgeschaltet oder gedroppt, die übrigen Kanäle an das nächste kaskadierte Filter weitergeleitet. Eine zweite hierzu symmetrisch aufgebaute Filteranordnung fasst alle durchgeschalteten Kanäle mit ADD-Kanälen sowie von allen Filtern unverändert durchgeschleiften Kanälen zusammen. Diese Anordnung ist nicht erweiterbar.

Aufgabe der Erfindung ist es, erweiterbares ADD-DROP-Modul mit geringer Einfügedämpfung anzugeben.

Diese Aufgabe wird durch ein Modul nach Anspruch 1 gelöst.

Vorteilhafte Weiterbildungen des Moduls sind in den abhängigen Ansprüchen angegeben.

Der besondere Vorteil des ADD-DROP-Moduls liegt darin, dass die nicht ADD-Drop-Schalteinheiten zugeführten "durchzuschleifenden" Signale nur geringfügig gedämpft werden. Diese können über eine Kaskadier-Schalteinheit einem weiteren zumindest annähernd gleich aufgebauten ADD-DROP-Modul zugeführt werden.

Besonders vorteilhaft ist ein ADD-DROP-Modul mit Abzweigmöglichkeiten für zwei Kanäle. Diese ADD-DROP-Kapazität reicht bereits in sehr vielen Fällen aus, und eine Erweiterung mit einem weiteren Modul ergibt eine in fast immer ausreichende ADD-DROP-Kapazität von vier Kanälen.

Als Filtereinheit zur Selektion der ADD-DROP-Kanäle kann ein Wellenlängen-Demultiplexer eingesetzt werden, der unterschiedlich breite Durchlaßbereiche aufweist. Dieser kann auch vorteilhaft aus optischen Einzelfiltern realisiert werden, vorzugsweise als Bragg-Gitter. Bei diesen wird der reflektierte Wellenbereich nur geringfügig gedämpft und kann daher dem kaskadierten ADD-DROP-Modul zugeführt werden.

Als optische Schalteinheiten werden vorzugsweise 2:2-Schalter eingesetzt, bei denen die Signale von zwei Eingängen **beliebig** auf zwei Ausgänge durchgeschaltet werden können.

Um gleiche Pegel bei sämtlichen Kanälen zu erhalten, ist es zweckmäßig, optische Dämpfungsglieder in den Signalwegen vorzusehen. Dies gilt besonders für den Signalweg der nicht abzweigbaren durchzuschleifenden Kanäle. Besonders vorteilhaft ist es dabei, in den Signalweg dieser Kanäle ein optisches Dämpfungsglied mit konstantem Wert einzufügen und den ADD-DROP-Schalteinheiten variable Dämpfungsglieder vorzuschalten.

Die Selektion der abgezweigten Kanäle kann durch ein Zusatzfilter weiter verbessert werden.

Die Erfindung wird anhand von Figuren näher beschrieben.

Es zeigen:
- Figur 1: ein Prinzipschaltbild der Erfindung und
- Figur 2: ein bevorzugtes Ausführungsbeispiel.

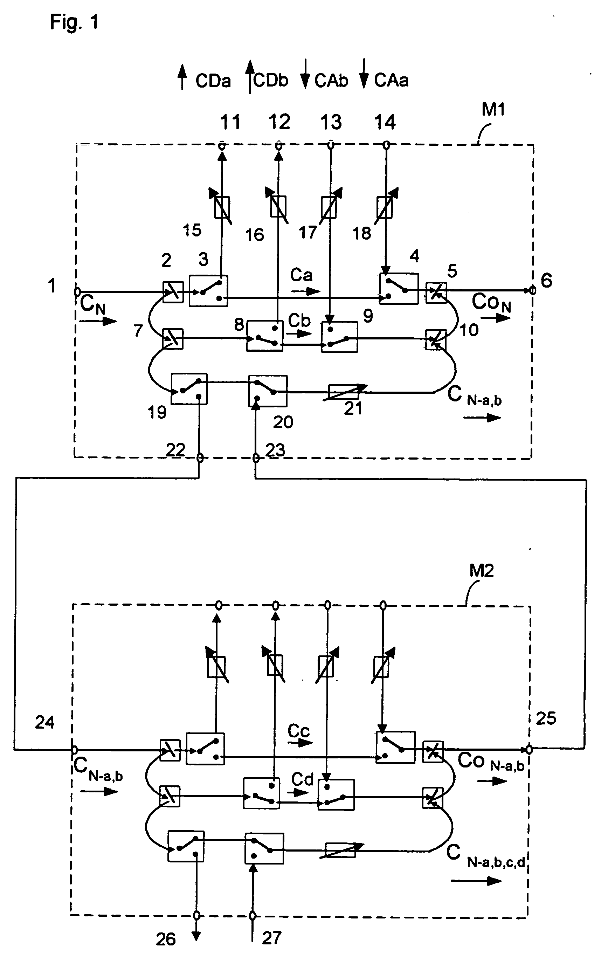

In **Figur 1** sind zwei ADD-DROP-Module M1 und M2 dargestellt. Beide Module sind gleich aufgebaut, deshalb wurden nur die Komponenten des ersten Moduls mit Bezugszeichen versehen. Einem WDM-Signaleingang 1 wird ein WDM-Signal C_{N} mit N-Kanälen zugeführt. Dieses gelangt zu einem ersten Kanalfilter 2, das die Durchschaltung eines Kanals Ca bewirkt und die restlichen N-a-Kanäle einem weiteren Kanalfilter 7 zuführt. Dieses selektiert eine weiteren Kanal Cb, während die restlichen N-a-b Kanäle C_{N-a,b} einer Kaskadier-Schalteinheit 19, 20 zugeführt werden.

Jeder abweigbare Kanal Ca, Cb wird jeweils einer ADD-Drop-Schalteinrichtung 3, 4 beziehungsweise 8, 9 zugeführt. Diese ist symbolisch mit zwei optische Umschaltern 3, 4 beziehungsweise 8, 9 dargestellt, die jedoch als 2:2-Schalter ausgeführt sind. Der erste Umschalter 3 ermöglicht das Abzweigen des Kanals Ca, der dann als DROP-Kanal CDa bezeichnet ist oder das Durchschalten dieses Kanals. In entsprechender Weise ermöglicht der Umschalter 4 das Einfügen eines ADD-Kanals CAa oder das Durchschalten (Durchschleifen) des Kanals Ca. Entsprechendes gilt für die ADD-DROP-Schalteinheit 8, 9, die den Kanal Cb entweder durchschaltet oder als DROP-Kanal CDb abzweigt und das Einfügen eines entsprechenden Kanals CAb ermöglicht.

Die durchzuschleifenden Kanäle C_{N-a,b} werden über die Kaskadier-Schalteinheit 19, 20 und - in der dargestellten Schalterstellung - über ein Dämpfungsglied 21 und ADD-Filter 10 und 5 (WDM-Multiplexer) geführt, wo sie mit den abzweigbaren bzw. eingefügten Kanälen zum WDM-Ausgangssignal Co_{N} zusammengefaßt werden und dann zum WDM-Signalausgang 6 gelangen.

Da die Dämpfung der über die Kaskadier-Schalteinheit 19, 20 durchzuschleifenden Kanäle C_{N-a,b} geringer ist als die der abzweigbaren Kanäle Ca, Cb, ist in dem Signalzweig der durchzuschleifenden Kanäle C_{N-a,b} ein optisches Dämpfungsglied 21 angeordnet. Die Pegel der DROP- und der ADD-Kanäle können durch Dämpfungsglieder 15 bis 18 eingestellt werden.

Wenn die ADD-DROP-Kapazität des Moduls M1 nicht mehr ausreicht, wird an die Kaskadier-Anschlüsse 22, 23 des ersten Moduls M1 der WDM-Signaleingang 24 und der WDM-Signalausgang 25 eines weiteren im Wesentlichen gleich aufgebauten Moduls M2 angeschaltet. Durch Betätigung der optischen Umschalter 19 und 20 der Kaskadier-Schalteinheit gelangen die bisher durchzüschleifenden Kanäle C_{N-a,b} nun zum Eingang 24 des zweiten Moduls M2. Von diesen Kanälen werden zwei weitere Kanäle Cc, Cd zwei weiteren ADD-DROP-Einrichtungen zugeführt, die diese Kanäle entweder abzweigen oder durchschalten können. Die vom zweiten Modul durchgeschalteten beziehungsweise neu eingefügten ADD-Kanäle werden mit den durchzuschleifenden Kanälen C_{N-a,b,c,d} zu einem Multiplexsignal Co_{N-a,b} zusammengefaßt, dem Kaskadier-Anschluß 23 des ersten Moduls zugeführt und über die ADD-Filter 10 und 5 zum neu konfigurierten WDM-Ausgangssignal Co_{N} zusammengefaßt.

Über Anschlüsse 26 und 27 des zweiten Moduls kann eine weitere Kaskadierung vorgenommen werden.

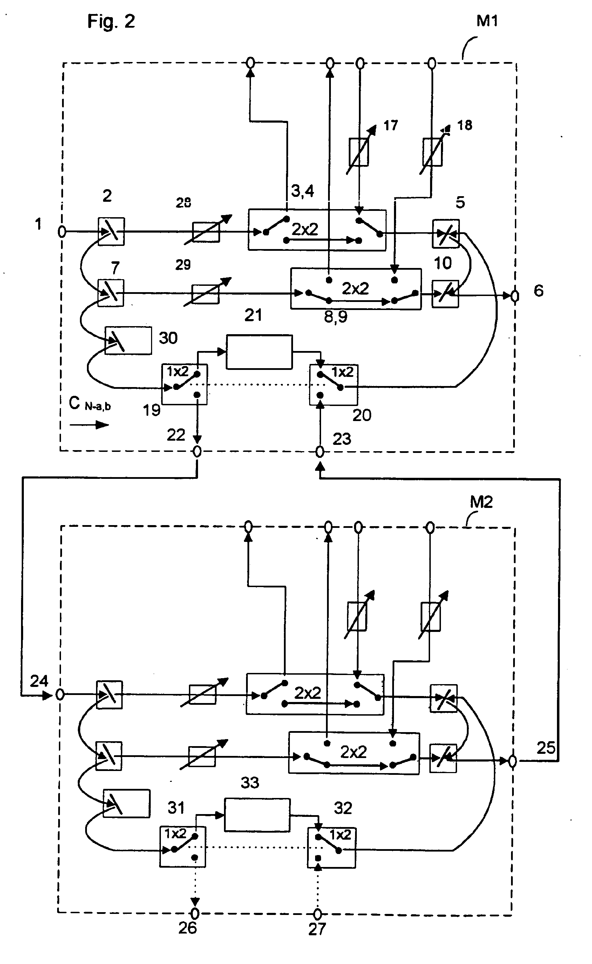

**Figur 2** zeigt ein bevorzugtes Ausführungsbeispiel der Erfindung. Die Umschalter 3 und 4 beziehungsweise 8 und 9 sind durch 2:2-Schalter 3, 4 beziehungsweise 3, 9 ersetzt. Die im ersten Modul durchzuschleifenden Kanäle C_{N-a,b} werden über ein weiteres Filter 30 geführt, das als Bandpaß dient und die Dämpfung der abzweigbaren Kanäle Ca und Cb verbessert. Das optische Dämpfungsglied 21 ist für den Fall, dass keine Kaskadierung erfolgt, zwischen die Umschalter 19 und 20 als Dämpfungsglied mit festem Wert eingefügt. Die Anpassung der übrigen Kanalpegel erfolgt durch variable Dämpfungsglieder 28 und 29, die den ADD-DROP-Schalteinrichtungen 3, 4 beziehungsweise 8, 9 vorgeschaltet sind. Da beim heutigen Stand der Technik bei weiterer Kaskadierung Dämpfungsprobleme auftreten, kann auf die Kaskadier-Schalteinrichtung 31, 32 des zweiten Moduls verzichtet werden und die durchzuschleifenden Kanäle können direkt über ein Dämpfungsglied 33 geführt werden. Die Kaskadier-Anschlüsse 26, 27 werden dann ebenfalls nicht benötigt.

## Patentansprüche

1. Modular erweiterbares optisches ADD-DROP-Modul (M1), das enthält
- eine erste Filteranordnung (2, 7), der ein WDM-Signal (C_{N}) zugeführt wird und die mindestens einen abzweigbaren Kanal (Ca) selektiert,
- mindestens eine ADD-Drop-Schalteinrichtung (3, 4), der der abzweigbare Kanal (Ca) zugeführt wird und die Umschalter (3 und 4) zum Durchschalten dieses Kanals (Ca) oder zum Abzweigen und zum Einfügen eines entsprechenden Kanals (CAa) aufweist,
- eine Kaskadier-Schalteinheit (19, 20), der von der ersten Filteranordnung (2, 7) durchzuschleifende Kanäle (C_{N-a,b}) zugeführt werden und die diese entweder durchschaltet oder einem zweiten im Wesentlichen gleichen ADD-DROP-Modul (M2) zuführt und dessen WDM-Ausgangssignal (Co_{N-a,b}) empfängt,
- eine ADD-Filteranordnung (5, 10) zum Zusammenfassen der abzweigbaren Kanäle (Ca, Cb) und der durchzuschleifenden Kanäle (C_{N-a,b}) des ersten ADD-DROP-Moduls (M1) und bei einem kaskadierten weiteren Modul (M2) gegebenenfalls der abzweigbaren Kanäle (Ca, Cb, Cc, Cd) und der durchzuschleifenden Kanäle (C_{N-a,b,c,d}) des ersten ADD-DROP-Moduls (M1) und des zweiten ADD-DROP-Moduls (M2) zu einem neu konfigurierten WDM-Ausgangssignal (C_{ON}).

2. ADD-DROP-Modul nach Anspruch 1,
**dadurch gekennzeichnet,**
**dass** eine Filteranordnung (2, 7) vorgesehen ist, die zwei Kanäle (Ca, Cb) selektiert.

3. ADD-DROP-Modul nach Anspruch 1 oder Anspruch 2,
**dadurch gekennzeichnet,**
**dass** als erste Filtereinheit (2, 7) und/oder als ADD-Filtereinheit (5, 10) kaskadierte Einzelfilter vorgesehen sind.

4. ADD-DROP-Modul nach einem der vorhergehenden Ansprüche,
**dadurch gekennzeichnet,**
**dass** als ADD-Drop-Schalteinrichtung (3, 4; 8, 9)) ein optischer 2:2-Schalter vorgesehen ist.

5. ADD-DROP-Modul nach einem der vorhergehenden Ansprüche,
**dadurch gekennzeichnet,**
**dass** im Signalpfad der durchzuschleifenden Kanäle (C_{N-a,b}) ein optisches Dämpfungsglied (21) angeordnet ist.

6. ADD-DROP-Modul nach einem der vorhergehenden Ansprüche,
**dadurch gekennzeichnet,**
**dass** einstellbare Dämpfungsglieder (28, 29) den ADD-Drop-Schalteinrichtungen (3, 4; 8, 9) vorgeschaltet sind.

7. ADD-DROP-Modul nach einem der vorhergehenden Ansprüche,
**dadurch gekennzeichnet,**
**dass** ein weiteres Filter (30) zur Dämpfung der abzweigbaren Kanäle (Ca, Cb) der Kaskadier-Schalteinrichtung (19, 20) vorgeschaltet ist.

8. ADD-DROP-Modul nach einem der vorhergehenden Ansprüche,
**dadurch gekennzeichnet,**
**dass** das optisches Dämpfungsglied (21) zwischen einem ersten Ausgang eines ersten Umschalters (19) und eines zweiten Umschalter (20) der Kaskadier-Schalteinrichtung (19, 20) eingeschaltet ist.

## Claims

1. Optical ADD-DROP module (M1) which can be expanded modularly and which contains the following:
- a first filter arrangement (2, 7) which is supplied with a WDM signal (C_{N}) and which selects at least one droppable channel (Ca),
- at least one ADD-DROP switching device (3, 4) which is supplied with the droppable channel (Ca) and which has changeover switches (3 and 4) for switching this channel (Ca) through or for dropping and for adding a corresponding channel (CAa),
- a cascading switching unit (19, 20) which is supplied with channels (C_{N-a,b}) to be looped through from the first filter arrangement (2, 7) and which either switches them through or supplies them to a second ADD-DROP module (M2) which is essentially identical, and receives the WDM output signal (Co_{N-a,b}) of the latter,
- an ADD filter arrangement (5, 10) for combining the droppable channels (Ca, Cb) and the channels (C_{N-a,b}) to be looped through from the first ADD-DROP module (M1) and, with a cascadable further module (M2), if necessary, the droppable channels (Ca, Cb, Cc, Cd) and the channels (C_{N-a,b,c,d}), to be looped through, of the first ADD-DROP module (M1) and of the second ADD-DROP module (M2), to form a newly configured WDM output signal (C_{ON}).

2. ADD-DROP module according to Claim 1, **characterized in that** a filter arrangement (2, 7) is provided which selects two channels (Ca, Cb).

3. ADD-DROP module according to Claim 1 or Claim 2, **characterized in that** cascaded individual filters are provided as first filter unit (2, 7) and/or as ADD filter unit (5, 10).

4. ADD-DROP module according to one of the preceding claims, **characterized in that** an optical 2:2 switch is provided as ADD-DROP switching device (3, 4; 8, 9).

5. ADD-DROP module according to one of the preceding claims, **characterized in that** an optical attenuation section (21) is arranged in the signal path of the channels (C_{N-a,b}) to be looped through.

6. ADD-DROP module according to one of the preceding claims, **characterized in that** adjustable attenuation sections (28, 29) are connected in series with the ADD-DROP switching devices (3, 4; 8, 9).

7. ADD-DROP module according to one of the preceding claims, **characterized in that** a further filter (30) for attenuating the droppable channels (Ca, Cb) is connected in series with the cascading switching device (19, 20).

8. ADD-DROP module according to one of the preceding claims, **characterized in that** the optical attenuation section (21) is inserted between a first output of a first changeover switch (19) and of a second changeover switch (20) of the cascading switching device (19, 20).

## Revendications

1. Module optique d'insertion-extraction extensible (M1) de façon modulaire, qui comprend
- un premier dispositif de filtre (2, 7) auquel un signal WDM (C_{N}) est amené, et qui sélectionne au moins un canal (Ca) dérivable,
- au moins un dispositif de commutation pour l'insertion-extraction (3, 4), auquel le canal dérivable (Ca) est amené, et qui présente des commutateurs (3 et 4) pour connecter ce canal (Ca) ou pour dériver et insérer un canal correspondant (CAa),
- une unité de commutation en cascade (19, 20) à laquelle des canaux (C_{N-a, b}) à mettre en boucle sont amenés par le premier dispositif de filtre (2, 7), et qui soit connecte ceux-ci soit les amène à un second module d'insertion-extraction (M2), essentiellement identique, et reçoit son signal de sortie WDM (CO_{N-a, b}),
- un dispositif de filtre d'insertion (5, 10) destiné à regrouper les canaux dérivables (Ca, Cb)et les canaux à mettre en boucle (C_{N-a, b}) du premier module d'insertion-extraction (M1) et, dans un autre module cascadé (M2), le cas échéant, les canaux dérivables (Ca, Cb, Cc, Cd) et les canaux (C_{N-a, b, c ,d}) à mettre en boucle du premier module d'insertion-extraction (M1) et du second module d'insertion-extraction (M2) en un signal de sortie WDM (C_{ON}) reconfiguré.

2. Module d'insertion-extraction selon la revendication 1,
**caractérisé en ce**
**qu'**un dispositif de filtre (2, 7) est prévu, qui sélectionne les deux canaux (Ca, Cb).

3. Module d'insertion-extraction selon la revendication 1 ou la revendication 2,
**caractérisé en ce**
**que** des filtres individuels cascadés sont prévus en tant que première unité de filtre (2, 7) et/ou en tant qu'unité de filtre d'insertion (5, 10).

4. Module d'insertion-extraction selon l'une quelconque des revendications précédentes,
**caractérisé en ce**
**qu'**un commutateur 2:2 optique est prévu en tant que dispositif de commutation pour l'insertion-extraction (3, 4 ; 8, 9).

5. Module d'insertion-extraction selon l'une quelconque des revendications précédentes,
**caractérisé en ce**
**qu'**un atténuateur optique (21) est disposé dans la voie de signal des canaux (C_{N-a, b}) à mettre en boucle.

6. Module d'insertion-extraction selon l'une quelconque des revendications précédentes,
**caractérisé en ce**
**que** des atténuateurs réglables (28, 29) sont installés en amont des dispositifs de commutation pour l'insertion-extraction (3, 4 ; 8, 9).

7. Module d'insertion-extraction selon l'une quelconque des revendications précédentes,
**caractérisé en ce**
**qu'**un autre filtre (30) est installé en amont du dispositif de commutation en cascade (19, 20) pour atténuer les canaux dérivables (Ca, Cb).

8. Module d'insertion-extraction selon l'une quelconque des revendications précédentes,
**caractérisé en ce**
**que** l'atténuateur optique (21) est connecté entre une première sortie d'un premier commutateur (19) et d'un deuxième commutateur (20) du dispositif de commutation en cascade (19, 20).
